# EUROPÄISCHE PATENTANMELDUNG

(11) **EP 1 147 925 A2**
(43) Veröffentlichungstag der Anmeldung: **24.10.2001**
(21) Anmeldenummer: 01107244.4
(22) Anmeldetag: 23.03.2001
(51) Int. Cl.: B60C 23/00

(54) **Dichtungsanordnung**

(30) Priorität: 19.04.2000 DE 10019641
(71) Anmelder: Firma Carl Freudenberg, 69469 Weinheim (DE)
(72) Erfinder: Krakofczik, Klaus, 69502 Hemsbach (DE); Röhner, Gerhard, 69502 Hemsbach (DE); Bok, Eberhard, Dr., 69509 Mörlenbach (DE); Hofmann, Günter, 68526 Ladenburg (DE); Lichtneckert, Timo, 68529 Mannheim (DE); Wetzel, Stephan, 69517 Gorxheimertal (DE)

(57) **Zusammenfassung**

Dichtungsanordnung mit einem druckabhängig schaltbaren Dichtring (1), der als Leitungsabschnitt (2) ausgebildet ist und zwei Leitungsenden (3, 4) bedarfsweise dicht miteinander verbindet, wobei jedes Leitungsende (3, 4) einen Bestandteil eines Maschinenelements (5, 6) bildet.

## Beschreibung

### Technisches Gebiet

Die Erfindung betrifft eine Dichtungsanordnung.

### Stand der Technik

Dichtungsanordnungen sind allgemein bekannt und gelangen zur gegenseitigen Abdichtung von zumindest zwei Maschinenelementen zur Anwendung, beispielsweise zur Abdichtung einer Welle, die durch ein Gehäuse geführt ist.

### Darstellung der Erfindung

Der Erfindung liegt die Aufgabe zugrunde, eine Dichtungsanordnung zu zeigen, die einfach und kostengünstig herstellbar ist und gute Gebrauchseigenschaften während einer langen Gebrauchsdauer aufweist.

Diese Aufgabe wird erfindungsgemäß mit den Merkmalen von Anspruch 1 gelöst. Auf vorteilhafte Ausgestaltungen nehmen die Unteransprüche Bezug.

Im Rahmen der vorliegenden Erfindung ist eine Dichtungsanordnung vorgesehen, mit einem druckabhängig schaltbaren Dichtring, der als Leitungsabschnitt ausgebildet ist und zwei Leitungsenden bedarfsweise dicht miteinander verbindet, wobei jedes Leitungsende einen Bestandteil eines Maschinenelements bildet. Die Maschinenelemente sind bevorzugt relativ zueinander verdrehbar. Der Dichtring kann einen Leitungsabschnitt einer Druckluftleitung bilden, wobei eines der Maschinenelemente durch eine Fahrzeugachse, das andere Maschinenelement durch eine drehbar auf der Achse gelagerte Fahrzeugfelge gebildet ist.

Um während der Fahrt den Luftdruck der Fahrzeugreifen an die jeweilige Beschaffenheit der Fahrbahn anpassen zu können, kann eine Druckluftleitung vorgesehen sein, wobei in diesem Beispiel die Felge konzentrisch zur Achse angeordnet ist und um diese rotiert.

Um eine möglichst leichte Verdrehbeweglichkeit der Maschinenelemente zueinander zu gewährleisten und um den betriebsbedingten Verschleiß des Dichtrings auf ein Minimum zu begrenzen, ist der Dichtring druckabhängig schaltbar und wird dichtend an das zweite Maschinenelement angedrückt, wenn Medium vom ersten Maschinenelement durch das erste Leitungsende und den Dichtring, der als Leitungsabschnitt ausgebildet ist, durch das zweite Leitungsende in das zweite Maschinenelement gefördert wird; ansonsten berührt der Dichtring das zweite Maschinenelement nicht oder mit nur geringer Dichtwirkung.

Nach einer ersten Ausgestaltung kann der Stützkörper kreisringförmig ausgebildet sein, ein im wesentlichen U-förmiges Profil aufweisen, wobei an den beiden sich in radialer Richtung erstreckenden Schenkeln jeweils eine Dichtlippe angeordnet ist, wobei die sich im wesentlichen in axialer Richtung erstreckenden Dichtlippen einander zugewandt angeordnet sind. Die Dichtlippen können einander mit axialem Abstand benachbart zugeordnet sein, wobei der durch den Abstand gebildete Spalt durch eine Drossel verschlossen ist. Die Drossel kann bevorzugt aus einem für das zu leitende Medium durchlässigen, porösen Schaumstoffkörper bestehen. Hinter der Drossel ist der Druck, bedingt durch die Drosselwirkung geringer.

Nach einer anderen Ausgestaltung kann der Dichtring zumindest einen Stützkörper umfassen und zumindest einen Durchlass zur strömungsleitenden Verbindung der Leitungsenden, wobei der Durchlass als Quetschventil ausgebildet ist. Dabei ist es vorgesehen, dass sich die einander axial benachbarten Dichtlippen anliegend berühren und druckabhängig um ihren jeweiligen Anlenkpunkt schwenkbar und in Offenstellung bringbar sind.

Gemäß einer weiteren vorteilhaften Ausgestaltung kann es vorgesehen sein, dass der Dichtring zumindest einen Stützkörper umfaßt und eine leitungsförmige Durchbrechung aufweist, die strömungsleitend und dicht mit dem ersten Leitungsende verbunden ist und auf der dem zweiten Leitungsende zugewandten Seite durch einen ventilartigen Verschlusskörper verschlossen ist, wobei der Verschlusskörper druckabhängig von der Durchbrechung abhebbar in Offenstellung bringbar ist. Der Dichtring ist nicht nur als Leitungsabschnitt sondern durch den Verschlusskörper gleichzeitig als Ventil ausgebildet. Bei Druckbeaufschlagung des zu fördernden Mediums in der Leitung im ersten Maschinenelement liegt ein übereinstimmender Druck auch im Bereich des ersten Leitungsendes und innerhalb des druckabhängig schaltbaren Dichtrings sowie am Verschlusskörper an. Erst bei Überschreitung eines vorbestimmten Öffnungsdrucks hebt der Verschlusskörper von der ventilsitzartig ausgebildeten Durchbrechung ab und gibt die Verbindung zwischen beiden Leitungsenden frei.

Nach einer vorteilhaften Ausgestaltung kann es vorgesehen sein, dass die Stützkörper auf der dem zweiten Leitungsende zugewandten Seite - im Längsschnitt betrachtet - axial beiderseits der Durchbrechung mit jeweils einer Dichtlippe verbunden sind, die bei Druckbeaufschlagung an das zweite Maschinenelement axial beiderseits des zweiten Leitungsendes dichtend anlegbar sind, wobei der Dichtring und die das zweite Maschinenelement dichtend berührenden Dichtlippen sowie das zweite Maschinenelement selbst, einen ersten, zur Umgebung abgedichteten ringförmigen Druckraum begrenzen.

Um eine selbsttätige, druckabhängige Schaltbarkeit des Dichtrings zu ermöglichen, kann jede der Dichtlippen mit einem Dichtringgehäuse jeweils einen zweiten Druckraum begrenzen, wobei die zweiten Druckräume dem ersten Druckraum funktionstechnisch vorgeschaltet sind und wobei die Durchbrechung und die zweiten Druckräume durch zumindest einen Bypass strömungsleitend verbunden sind.

Bevorzugt ist der Bypass im Stützkörper angeordnet. Hierbei ist von Vorteil, dass der Stützkörper aus einem zähharten Werkstoff besteht und der Bypass dadurch während der bestimmungsgemäßen Verwendung eine unveränderliche Form und daher stets übereinstimmende Gebrauchseigenschaften aufweist.

Die Schaltbarkeit der Dichtlippe kann dadurch erfolgen, dass die Dichtlippen innerhalb der zweiten Druckräume jeweils eine hydraulisch wirksame Innenfläche aufweisen, die größer ist als die hydraulisch wirksame Außenfläche, die sich - im Längsschnitt betrachtet - vom Verschlusskörper/von der Querschnittsverengung axial beiderseits bis zu einem ersten Dichtbereich erstreckt, der an das zweite Maschinenelement dichtend anlegbar ist.

Zur Funktion der erfindungsgemäßen Dichtungsanordnung wird folgendes ausgeführt:
In die Leitung des ersten Maschinenelements wird ein zu förderndes Medium, beispielsweise Luft, unter Druck eingespeist. Das Medium strömt durch die Leitung im ersten Maschinenelement und durch das erste Leitungsende in die leitungsförmige Durchbrechung des Dichtrings. Zu diesem Zeitpunkt dichtet der Verschlusskörper die Durchbrechung in Richtung des zweiten Leitungsendes zumindest im wesentlichen noch ab.

Der Druck liegt ebenfalls innerhalb der Bypässe und innerhalb der zweiten Druckräume an. Auf der den zweiten Druckräumen abgewandten Seite der Dichtlippen herrscht noch ein geringeres Druckniveau als in den Druckräumen, da die Dichtlippen die Oberfläche des zweiten Maschinenelements noch nicht anliegend berühren.

Der Druck wirkt auf die hydraulisch wirksame Innenfläche der Dichtlippen und bewegt diese solange in Richtung des zweiten Maschinenelements, bis die Dichtlippen dieses anliegend berühren. Ab diesem Zeitpunkt ist der erste Druckraum gegenüber der Umgebung abgedichtet.

Bei weiterem Druckanstieg hebt der Verschlusskörper, bedingt durch die Druckdifferenz zwischen dem ersten Druckraum und den zweiten Druckräumen von seinem Ventilsitz auf der Durchbrechung ab. Der Dichtring wirkt nun als Leitungsabschnitt und verbindet die Leitungsenden der beiden Maschinenelemente strömungsleitend miteinander.

Da die Innenflächen der Dichtlippen größer als die Außenflächen sind, werden die Dichtlippen mit einer ausreichenden Vorspannung an die Oberfläche des zweiten Maschinenelements angedrückt und dichten gegen die Umgebung ab.

Ist der Fördervorgang vom ersten Maschinenelement zum zweiten Maschinenelement abgeschlossen, wobei im zweiten Leitungsende beispielsweise ein nur in Richtung des zweiten Maschinenelements durchströmbares Rückschlagventil angeordnet sein kann, wird die Druckbeaufschlagung im ersten Maschinenelement immer weiter reduziert. Der Verschlusskörper bewegt sich wieder in Richtung der Durchbrechung und schließt diese bei weiter reduziertem Druck gegenüber der Umgebung ab.

Die Dichtlippen federn radial in Richtung der zweiten Druckräume zurück; die Dichtlippen berühren die Oberfläche des zweiten Maschinenelements nur noch schwach oder sogar nicht mehr und im ersten Druckraum herrscht wieder Umgebungsdruck.

Der Verschlusskörper kann durch einen Ring aus elastischem Werkstoff gebildet sein. Hierbei ist von Vorteil, dass Ringe in einer Vielzahl unterschiedlicher Größen und Formen kostengünstig verfügbar sind.

Der Dichtring kann aus zwei spiegelbildlich zu einer gedachten Radialebene ausgebildeten Teil-Dichtringen bestehen, die bevorzugt eine vormontierbare Einheit bilden. Die Teil-Dichtringe können auf ihren einander zugewandten Stirnseiten jeweils eine nutförmige Ausnehmung aufweisen, wobei die nutförmigen Ausnehmungen im montierten Zustand der Teil-Dichtringe die Durchbrechung begrenzen. Die vormontierbare Einheit bildet dann den Leitungsabschnitt, wobei alle funktionswesentlichen Teile in der vormontierbaren Einheit zusammengefaßt sind. Die Montage ist durch eine solche Ausgestaltung sehr vereinfacht und Montagefehler sind auf ein Minimum begrenzt.

Jeder der Teil-Dichtringe kann einen L-förmigen Stützkörper aufweisen, wobei jeweils im Radialschenkel der Stützkörper der Bypass zur Druckbeaufschlagung der zweiten Druckräume angeordnet ist.

Das Dichtringgehäuse kann jeweils durch einen L-förmigen Winkelring gebildet sein, der mit dem Stützring dichtend verbunden ist, wobei die Radialschenkel der Winkelringe von quasi-statisch beanspruchten zweiten Dichtbereichen der Dichtlippe dichtend berührt sind. Die Relativbewegung zwischen dem zweiten Dichtbereich der Dichtlippe und den Radialschenkeln der Winkelringe beschränkt sich auf geringe radiale Verlagerungen zur Abdichtung des ersten Druckraums gegenüber der Umgebung und anschließend zur erneuten Verbindung mit der Umgebung.

Die Radialschenkel und die entsprechenden quasi-statischen zweiten Dichtbereiche berühren einander stets dichtend anliegend. Dadurch ist sichergestellt, dass die zweiten Druckräume zur Umgebung stets hermetisch abgeschlossen sind und durch Druckbeaufschlagung exakt betätigbar sind.

Bevorzugt ist der Dichtring als Kassettendichtung ausgebildet und bildet dadurch die vormontierbare Einheit. Nach einer anderen Ausgestaltung besteht die Möglichkeit, dass zwei spiegelbildlich zu der gedachten Radialebene ausgebildete Teil-Dichtringe auf das erste Maschinenelement aufgepresst und dadurch zueinander und zum zweiten Maschinenelement positioniert werden. Die Dichtungsanordnung kann als Leitungsabschnitt in einer Druckluftleitung einer Fahrzeugfelge zum Verändern des Luftdrucks in einem Fahrzeugreifen dienen.

### Kurzbeschreibung der Zeichnungen

Zwei Ausführungsbeispiele der erfindungsgemäßen Dichtungsanordnung werden nachfolgend anhand der Figuren 1 bis 7 näher beschrieben.

### Diese zeigen jeweils in schematischer Darstellung:

- Fig. 1: Ein erstes Ausführungsbeispiel der erfindungsgemäßen Dichtungsanordnung in Kassettenbauweise,

- Fig. 2: ein zweites Ausführungsbeispiel, ähnlich dem Ausführungsbeispiel aus Fig. 1,
- Fig. 3: einen Ausschnitt aus dem Fahrwerk eines Kraftfahrzeugs, in dem das Ausführungsbeispiel aus Fig. 1 zur Anwendung gelangt,
- Fig. 4: ein weiteres Ausführungsbeispiel, ähnlich dem Ausführungsbeispiel aus Fig. 1, bei dem jedoch nur ein einziger Stützkörper zur Anwendung gelangt,
- Fig. 5: ein weiteres Ausführungsbeispiel, bei dem der Durchlass durch ein Quetschventil gebildet ist, wobei das Quetschventil geschlossen ist,
- Fig. 6: das Ausführungsbeispiel aus Fig. 5, wobei sich das Quetschventil in Offenstellung befindet,
- Fig. 7: ein weiteres Ausführungsbeispiel, bei dem der Durchlass durch einen porösen Schaumstoffkörper verschlossen ist.

### Ausführung der Erfindung

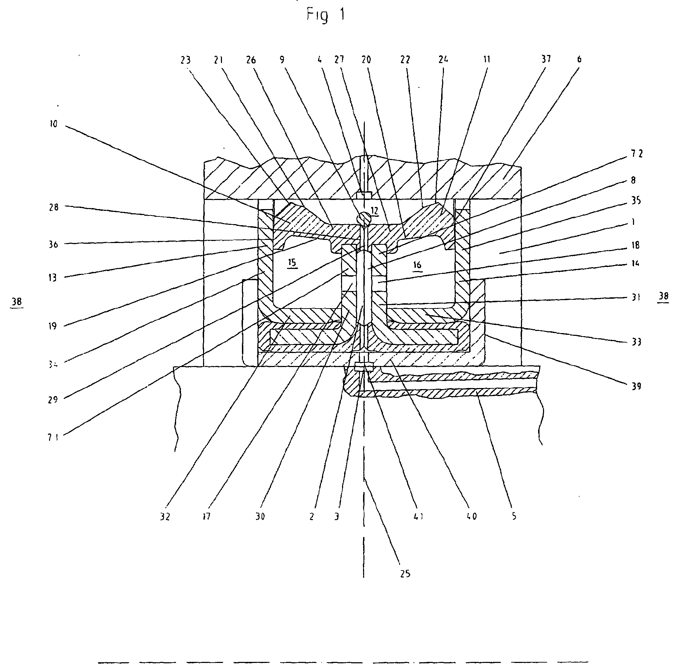

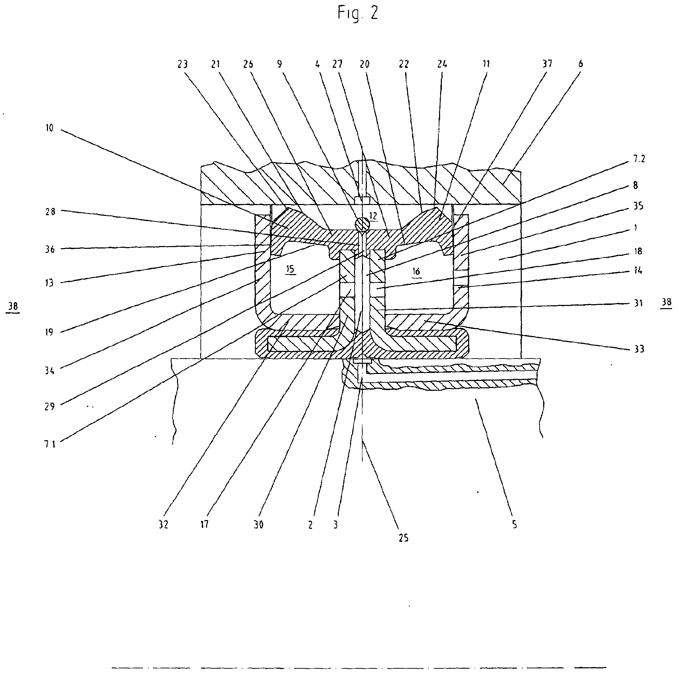

In den Figuren 1 und 2 ist jeweils eine Dichtungsanordnung mit einem druckabhängig schaltbaren Dichtring 1 gezeigt, der als Leitungsabschnitt 2 ausgebildet ist. Der Leitungsabschnitt 2 ist in Strömungsrichtung zwischen zwei Leitungsenden 3, 4 angeordnet, wobei die Leitungsenden 3, 4 jeweils einen Bestandteil eines Maschinenelements 5, 6 bilden. Der duckabhängig schaltbare Dichtring 1 verbindet die beiden Leitungsenden 3, 4 bedarfsweise miteinander, dadurch, dass der Dichtring 1 in Abhängigkeit vom Leitungsdruck innerhalb des ersten Maschinenelements 5 schaltbar ist. Die Querschnittsverengung hier durch einen Ring und einen Sitz im Dichtring gebildet.

In die Leitung des ersten Maschinenelements 5 wird ein zu förderndes Medium, beispielsweise Luft, unter Druck eingespeist. Das Medium strömt durch die Leitung im ersten Maschinenelement 5 und durch das erste Leitungsende 3 in die leitungsförmige Durchbrechung 8 des Dichtrings 1. Zu diesem Zeitpunkt ist der Querschnitt zwischen dem Ring und dem Sitz so eng, dass eine im wesentlichen dichtende Wirkung erreicht wird.

Der Druck liegt ebenfalls innerhalb der Bypässe 17, 18 und innerhalb der zweiten Druckräume 15, 16 an. Auf der den zweiten Druckräumen 15, 16 abgewandten Seite der Dichtlippen 10, 11 herrscht noch Atmosphärendruck, da die Dichtlippen 10, 11 die Oberfläche des zweiten Maschinenelements 6 noch nicht anliegend berühren.

Bei Erhöhung des Drucks wirkt dieser auf die hydraulisch wirksamen Innenflächen 19, 20 der Dichtlippen 10, 11 und bewegt diese, bei nach wie vor verschlossener Durchbrechung 8, solange in Richtung des zweiten Maschinenelements 6, bis die Dichtlippen 10, 11 dieses anliegend berühren. Ab diesem Zeitpunkt ist der erste Druckraum 12 gegenüber der Umgebung 38 abgedichtet.

Bei weiterem Druckanstieg hebt der Verschlusskörper 9, bedingt durch die Druckdifferenz zwischen dem ersten Druckraum 12 und den zweiten Druckräumen 15, 16 von seinem Ventilsitz auf der Durchbrechung 8 ab. Der Dichtring 1 wirkt nun als Leitungsabschnitt 2 und verbindet die Leitungsenden 3, 4 der beiden Maschinenelemente 5, 6 strömungsleitend miteinander.

Da die Innenflächen 19, 20 der Dichtlippen 10, 11 größer sind, als die Außenflächen 21, 22, werden die Dichtlippen 10, 11 mit einer ausreichenden Vorspannung an die Oberfläche des zweiten Maschinenelements 6 angedrückt, um dadurch gegen die Umgebung 38 abzudichten.

Ist der Fördervorgang vom ersten Maschinenelement 5 zum zweiten Maschinenelement 6 abgeschlossen, wobei im zweiten Leitungsende 4 beispielsweise ein nur in Richtung des zweiten Maschinenelements 6 durchströmbares Rückschlagventil angeordnet sein kann, wird die Druckbeaufschlagung im ersten Maschinenelement 5 immer weiter reduziert. Der Verschlusskörper 9 bewegt sich wieder in Richtung der Durchbrechung 8 und schließt diese bei weiter reduziertem Druck gegenüber der Umgebung 38 ab.

Die Dichtlippen 10, 11 federn radial in Richtung der zweiten Druckräume 15, 16 zurück; die Dichtlippen 10, 11 berühren die Oberfläche des zweiten Maschinenelements 6 nicht mehr und im ersten Druckraum 12 herrscht wieder Umgebungsdruck.

In Fig. 1 umfaßt die Dichtungsanordnung eine vormontierbare Einheit 39. Die vormontierbare Einheit 39 besteht aus dem druckabhängig schaltbaren Dichtring 1, der zwei Teil-Dichtringe 26, 27 umfaßt. Die Teil-Dichtringe 26, 27 sind spiegelbildlich zu der gedachten Radialebene 25 angeordnet, wobei die nutförmigen Ausnehmungen 28, 29 im zusammengebauten Zustand die Durchbrechung 8 begrenzen, die das erste Leitungsende 3 des ersten Maschinenelements 5 bedarfsweise mit dem zweiten Leitungsende 4 des zweiten Maschinenelements 6 verbindet.

Die beiden Teil-Dichtringe 26, 27 weisen im wesentlichen die Form von Radialwellendichtringen auf, wobei zur Bildung der zweiten Druckräume 15, 16 die Winkelringe 32, 33 vorgesehen sind, die dichtend in die Stützkörper 7.1, 7.2 der Teil-Dichtringe 26, 27 eingepresst sind. Die zweiten Dichtbereiche 36, 37 der jeweiligen Teil-Dichtringe 26, 27 liegen unter elastischer Vorspannung an den Radialschenkeln 34, 35 der Winkelringe 32, 33 dichtend an.

Zur Herstellung der vormontierbaren Einheit ist eine zweiteilige Klammer 40 vorgesehen, die die beiden Teil-Dichtringe 26, 27 innenseitig umschließt. Die Klammer 40 weist ebenfalls eine Ausnehmung 41 auf, um die Verbindung des ersten Leitungsendes 3 mit der Durchbrechung 8 zu ermöglichen.

Das Ausführungsbeispiel aus Fig. 2 unterscheidet sich vom Ausführungsbeispiel aus Fig. 1 dadurch, dass der Dichtring 1 nicht als Kassettendichtung ausgebildet ist. Der Dichtring 1 besteht aus den beiden Teil-Dichtringen 26, 27, die spiegelbildlich zu der gedachten Radialebene 25 angeordnet sind. Die beiden Teil-Dichtringe 26, 27 sind derart auf dem ersten Maschinenelement 5 positioniert, dass die Durchbrechung 8 und das erste Leitungsende 3 miteinander fluchten. Die Dichtlippen 10, 11 sind, wie hier im Längsschnitt gezeigt, axial beiderseits des zweiten Leitungsendes 4 angeordnet und begrenzen bei ausreichender Druckbeaufschlagung zusammen mit dem zweiten Maschinenelement 6 den ersten Druckraum 12 und schließen diesen gegenüber der Umgebung 38 ab.

Die beiden Maschinenelemente 5, 6 sowie der Dichtring 1 sind in den hier gezeigten Ausführungsbeispielen rotationssymmetrisch.

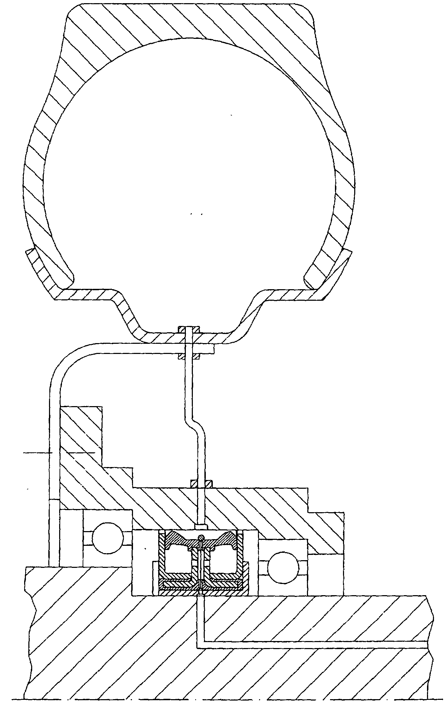

In Fig. 3 ist ein Anwendungsbeispiel für die beanspruchte Dichtungsanordnung gezeigt.

Die Dichtungsanordnung bildet einen Leitungsabschnitt 2 in einer Druckluftleitung einer Fahrzeugfelge zum Verändern des Luftdrucks in einem Fahrzeugreifen.

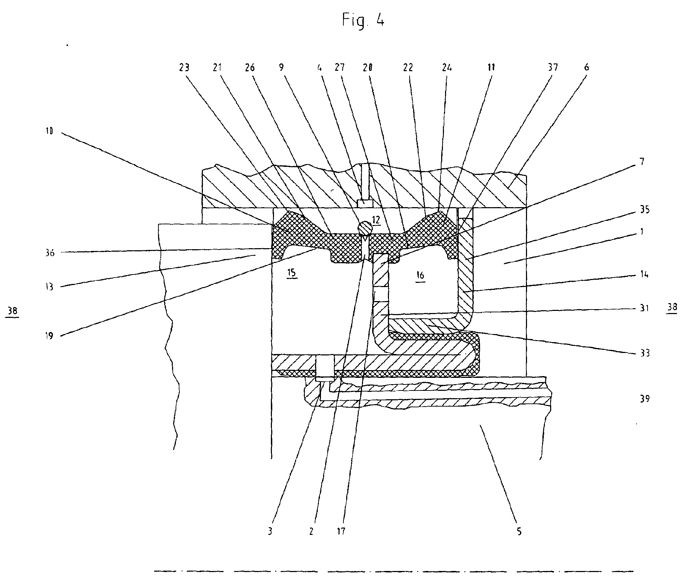

In Fig. 4 ist ein weiteres Ausführungsbeispiel gezeigt, ähnlich dem Ausführungsbeispiel aus Fig. 1, wobei jedoch nur ein einziger Stützkörper 7 zur Anwendung gelangt. An dem einzigen Stützkörper 7 sind die Dichtlippen 10, 11 angeordnet, wobei die Dichtlippen 10, 11 in diesem Ausführungsbeispiel einstückig und materialeinheitlich ausgebildet sind.

In diesem Ausführungsbeispiel sind gleichmäßig und in Umfangsrichtung verteilte Durchbrechungen vorgesehen, die den elastomeren Werkstoffkörper, der die beiden Dichtlippen 10, 11 umfasst, in radialer Richtung durchdringen.

Die Funktion unterscheidet sich von der Funktion des Dichtrings 1 aus Fig. 1 nicht.

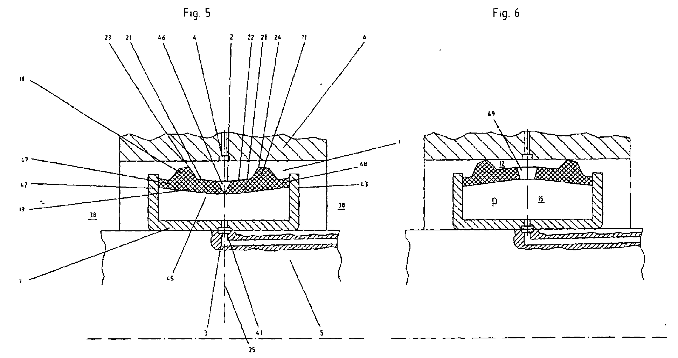

In den Figuren 5 und 6 ist ein weiteres Beispiel einer Dichtungsanordnung gezeigt, wobei der Dichtring 1 einen Stützkörper 7 umfasst, der kreisringförmig ausgebildet ist und ein im wesentlichen U-förmiges Profil aufweist. Die beiden sich in radialer Richtung erstreckenden Schenkel 42, 43 weisen jeweils eine Dichtlippe 10, 11 auf, wobei sich die Dichtlippen 10, 11 im wesentlichen in axialer Richtung erstrecken und einander zugewandt sind. Der Durchlass 49 ist durch das Quetschventil 44 verschlossen, wobei das Quetschventil 44 durch die beiden Dichtlippen 10, 11 gebildet ist.

Bei Druckbeaufschlagung des zweiten Druckraums 15 wölben sich die beiden Dichtlippen 10, 11 radial um ihre jeweiligen Anlenkpunkte 47, 48 nach außen, bis die Dichtbereiche 23, 24 der Dichtlippen 10, 11 die Oberfläche des zweiten Maschinenelements 6 dichtend berühren. Das zu fördernde Medium strömt dann, bei Öffnung des Quetschventils 46 vom ersten Leitungsende 3 durch den zweiten Druckraum 15 sowie den Durchlass 19 in das zweite Leitungsende 4.

Bei Reduzierung des Drucks nimmt das Quetschventil 46 wieder die Position, wie in Fig. 5 gezeigt, ein.

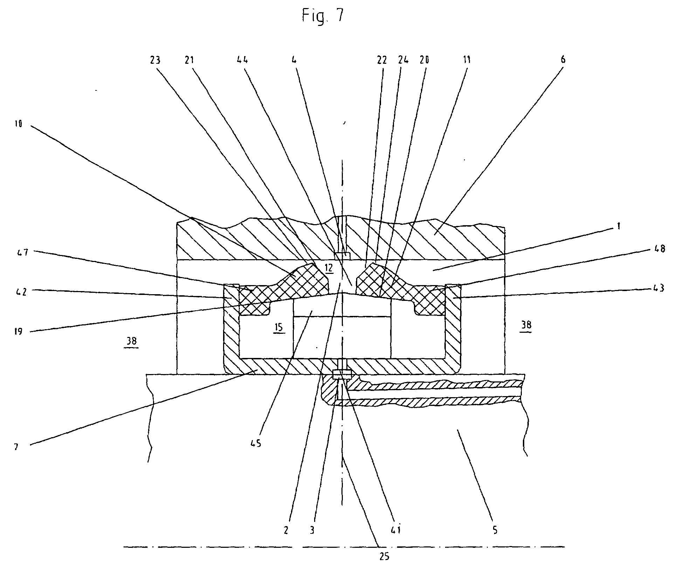

In Fig. 7 ist ein weiteres Ausführungsbeispiel gezeigt, ähnlich dem Ausführungsbeispiel aus den Figuren 5 und 6. Unterschiedlich dazu ist jedoch der mediumsdurchlässige, poröse Schaumstoffkörper 45, der den Spalt 44 auf der dem ersten Maschinenelement 5 zugewandten Seite der Dichtlippen 10, 11 überdeckt.

Der Schaumstoffkörper 45 ist, ebenso wie die beiden Dichtlippen 10, 11, in radialer Richtung elastisch nachgiebig, so dass sich bei Druckbeaufschlagung des zweiten Druckraums 15 eine radiale Aufweitung des Schaumstoffkörpers 45 und die Anpressung der Dichtbereiche 22, 24 der beiden Dichtlippen 10, 11 an die Oberfläche des zweiten Maschinenelements 6 ergibt, die dem Dichtring 1 zugewandt ist.

Im hier gezeigten Ausführungsbeispiel kann der Schaumstoffkörper 45 gleichzeitig als Filter verwendet werden, beispielsweise, um Schwebstoffpartikel aus dem zu fördernden Medium zu filtern.

## Patentansprüche

1. Dichtungsanordnung mit einem druckabhängig schaltbaren Dichtring (1), der als Leitungsabschnitt (2) ausgebildet ist und zwei Leitungsenden (3, 4) bedarfsweise dicht miteinander verbindet, wobei jedes Leitungsende (3, 4) einen Bestandteil eines Maschinenelements (5, 6) bildet.

2. Dichtungsanordnung nach Anspruch 1, **dadurch gekennzeichnet, dass** der Stützkörper (7) kreisringförmig ausgebildet ist, ein im wesentlichen U-förmiges Profil aufweist und dass an den beiden sich in radialer Richtung erstreckenden Schenkeln (42, 43) jeweils eine Dichtlippe (10, 11) angeordnet ist und dass die sich im wesentlichen in axialer Richtung erstreckenden Dichtlippen (10, 11) einander zugewandt angeordnet sind.

3. Dichtungsanordnung nach einem der Ansprüche 1 oder 2, **dadurch gekennzeichnet, dass** die Dichtlippen (10, 11) einander mit axialem Abstand benachbart zugeordnet sind und dass der durch den Abstand gebildete Spalt (44) durch eine Querschnittsverengung für das durchströmende Fluid gebildet ist.

4. Dichtungsanordnung nach Anspruch 3, **dadurch gekennzeichnet, dass** die Drossel aus einem luftdurchlässigen, porösem Schaumstoffkörper (45) besteht.

5. Dichtungsanordnung nach Anspruch 1, **dadurch gekennzeichnet, dass** der Dichtring (1) zumindest einen Stützkörper (7) umfasst und zumindest einen Durchlass zur strömungsleitenden Verbindung der beiden Leitungsenden (3, 4) aufweist und dass der Durchlass als Quetschventil (46) ausgebildet ist.

6. Dichtungsanordnung nach Anspruch 5, **dadurch gekennzeichnet, dass** sich die einander axial benachbarten Dichtlippen (10, 11) anliegend berühren und druckabhängig um ihren jeweiligen Anlenkpunkt (47, 48) schwenkbar und in Offenstellung bringbar sind.

7. Dichtungsanordnung nach Anspruch 1, **dadurch gekennzeichnet, daß** der Dichtring (1) zumindest einen Stützkörper (7) umfaßt und eine leitungsförmige Durchbrechung (8) aufweist, die strömungsleitend und dicht mit dem ersten Leitungsende (3) verbunden ist und auf der dem zweiten Leitungsende (4) zugewandten Seite durch einen ventilartigen Verschlusskörper (9) verschlossen ist und dass der Verschlusskörper (9) druckabhängig von der Durchbrechung (8) abhebbar in Offenstellung bringbar ist.

8. Dichtungsanordnung nach einem der Ansprüche 1 bis 7, **dadurch gekennzeichnet, daß** der Stützkörper (7) auf der dem zweiten Leitungsende (4) zugewandten Seite - im Längsschnitt betrachtet - axial beiderseits der Durchbrechung (8) mit jeweils einer Dichtlippe (10, 11) verbunden ist, die bei Druckbeaufschlagung an das zweite Maschinenelement (6) axial beiderseits des zweiten Leitungsendes (4) dichtend anlegbar ist und dass der Dichtring (1) und die das zweite Maschinenelement (6) dichtend berührenden Dichtlippen (10, 11) sowie das zweite Maschinenelement (6) selbst einen ersten, zur Umgebung (38) abgedichteten, ringförmigen Druckraum (12) begrenzen.

9. Dichtungsanordnung nach einem der Ansprüche 1 bis 8, **dadurch gekennzeichnet, daß** jede der Dichtlippen (10, 11) mit einem Dichtringgehäuse (13, 14) jeweils einen zweiten Druckraum (15, 16) begrenzt, daß die zweiten Druckräume (15, 16) dem ersten Druckraum (12) funktionstechnisch vorgeschaltet sind und daß die Durchbrechung (8) und die zweiten Druckräume (15, 16) durch jeweils zumindest einen Bypass (17, 18) strömungsleitend verbunden sind.

10. Dichtungsanordnung nach Anspruch 9, **dadurch gekennzeichnet, daß** der Bypass (17,18) im Stützkörper (7.1, 7.2) angeordnet ist.

11. Dichtungsanordnung nach einem der Ansprüche 1 bis 10, **dadurch gekennzeichnet, daß** die Dichtlippen (10, 11) innerhalb der zweiten Druckräume (15, 16) jeweils eine hydraulisch wirksame Innenfläche (19, 20) aufweisen, die größer ist, als die hydraulisch wirksame Außenfläche (21, 22), die sich - im Längsschnitt betrachtet - vom Verschlusskörper (9) axial bis zu einem ersten Dichtbereich (23, 24) erstreckt, der an das zweite Maschinenelement (6) dichtend anlegbar ist.

12. Dichtungsanordnung nach einem der Ansprüche 7 bis 11, **dadurch gekennzeichnet, daß** der Verschlusskörper (9) durch einen O-Ring aus gummielastischem Werkstoff gebildet ist.

13. Dichtungsanordnung nach einem der Ansprüche 1 bis 12, **dadurch gekennzeichnet, daß** der Dichtring (1) aus zwei spiegelbildlich zu einer gedachten Radialebene (25) ausgebildeten Teil-Dichtringen (26, 27) besteht, daß die Teil-Dichtringe (26, 27) auf ihren einander zugewandten Stirnseiten mindestens eine nutförmige Ausnehmung (28, 29) aufweisen und dass die nutförmige Ausnehmung (28, 29) im montierten Zustand der Teil-Dichtringe (26, 27) die Durchbrechung (8) begrenzt.

14. Dichtungsanordnung nach einem der Ansprüche 7 bis 13, **dadurch gekennzeichnet, daß** jeder der Teil-Dichtringe (26, 27) einen L-förmigen Stützkörper (7.1, 7.2) aufweist und dass jeweils im Radialschenkel (30, 31) der Stützkörper (7.1, 7.2) der Bypass (17, 18) angeordnet ist.

15. Dichtungsanordnung nach einem der Ansprüche 1 bis 14, **dadurch gekennzeichnet, daß** das Dichtringgehäuse (13, 14) jeweils durch einen L-förmigen Winkelring (32, 33) gebildet ist, der mit dem Stützring (7.1, 7.2) dichtend verbunden ist und dass die Radialschenkel (34, 35) der Winkelringe (32, 33) einen quasi-statisch beanspruchten zweiten Dichtbereich (26, 37) der Dichtlippe (10, 11) dichtend berührt.

16. Dichtungsanordnung nach Anspruch 15, **dadurch gekennzeichnet, dass** die Radialschenkel (34, 35) und die entsprechenden zweiten Dichtbereiche (36, 37) einander stets dichtend anliegend berühren.

17. Dichtungsanordnung nach einem der Ansprüche 1 bis 16, **dadurch gekennzeichnet, daß** der Dichtring (1) als Kassettendichtung ausgebildet ist.

18. Verwendung einer Dichtungsanordnung nach einem der vorhergehenden Ansprüche als Leitungsabschnitt (2) in einer Druckluftleitung einer Fahrzeugfelge zum Verändern des Luftdrucks in einem Fahrzeugreifen.
